# EUROPÄISCHE PATENTANMELDUNG

(11) **EP 1 820 818 A1**
(43) Veröffentlichungstag der Anmeldung: **22.08.2007**
(21) Anmeldenummer: 06101695.2
(22) Anmeldetag: 15.02.2006
(51) Int. Cl.: C08J 9/38, B29C 44/56

(54) **Verfahren zur Herstellung eines offenzelligen, vernetzten Polyolefinschaumes**

(71) Anmelder: Trocellen GmbH, 53840 Troisdorf (DE)
(72) Erfinder: Kautz, Rudolf, 53721, Siegburg (DE); Frank, Michael, 53757, Sankt Augustin (DE)
(74) Vertreter: Wübken, Ludger

(57) **Zusammenfassung**

Es wird ein Verfahren zur Herstellung eines offenzelligen, vernetzten Polyolefinschaumes beschrieben, bei dem zunächst ein geschlossenzelliger, vernetzter Polyolefinschaum hergestellt und anschließend die Zellen mechanisch wenigstens teilweise geöffnet werden, wobei der zunächst geschlossenzellige, vernetzte Polyolefinschaum auf eine Temperatur unterhalb der Versprödungstemperatur T_{V} des Polyolefinwerkstoffs abgekühlt und der abgekühlte Schaumstoff einer mechanischen Beanspruchung unterworfen wird, bei der die Zellen wenigstens teilweise geöffnet werden.

## Beschreibung

### Technisches Gebiet

Polyolefinschaumstoffe, insbesondere vernetzte Polyethylenschaumstoffe, werden seit längerem großtechnisch insbesondere auch in Bahnenware mit Rohdichten zwischen ca. 25 kg/m³ bis ca. 300 kg/m³ hergestellt. Bei der üblichen Herstellung von vernetztem Polyethylenschaumstoff wird zunächst eine so genannte Matrix aus ungeschäumtem, ein chemisches Treibmittel enthaltendem Polyethylen hergestellt. Bei chemisch vernetztem Polyethylenschaumstoff (DE 1 694 130 C1) enthält diese Matrix zusätzlich zum chemischen Treibmittel, meist Azodicarbonamid, ein chemisches Vernetzungsmittel, in der Regel ein Peroxid, insbesondere Dicumylperoxid. Alternativ zur chemischen Vernetzung wird großtechnisch auch die Strahlenvernetzung (DE 1 947 589 C1) eingesetzt. Die Matrix wird anschließend in einem Schäumofen aufgeschäumt, wobei bei physikalischer Vernetzung dünner Schäume in der Regel ein vertikaler Schäumofen, bei der chemischen Vernetzung ein horizontaler Schäumofen eingesetzt wird. Die Art der Verschäumung bedingt, dass der Schaum wenigstens weitgehend geschlossenzellig ist. Als geschlossenzellig werden in der Regel Schäume bezeichnet, bei denen mindestens 50, insbesondere mehr als 70 % und meist mehr als 90 % der einzelnen Zellen vollständig geschlossen sind.

### Stand der Technik

Es sind bereits zahlreiche Verfahren bekannt geworden, mit denen die Zellen eines zunächst geschlossenzelligen, vernetzten Polyolefinschaumes anschließend mechanisch geöffnet werden.

Beim so genannten Retikulieren von Polyolefinschaum wird der geschlossenzellige Schaumstoff zunächst genadelt, um eine gewisse Anzahl von Zellen mechanisch zu öffnen. In einem zweiten Schritt wird in einem Autoklaven ein brennbares Gas in den Schaumstoff eingebracht und dort gezündet. Dabei verschmelzen die dünnen Zellwände, die verbleibenden Stege der Zellen hinterlassen einen offenzelligen Schaumstoff (siehe Firmendruckschrift "Retikulieren von Schaumstoffen", EMW Filtertechnik GmbH, Internet-Veröffentlichung, sowie die DE 1 504 096 C3). Ein solches Retikulier-Verfahren ist allerdings äußerst aufwendig und lässt sich nicht kontinuierlich betreiben.

Aus der DE 198 40 203 A1 ist ein gattungsgemäßes Verfahren zur Herstellung von weichen Polyolefinschaumstoffen mit teilweise aufgebrochener Zellstruktur bekannt, bei dem eine geschlossenzellige geschäumte Polyolefinbahn durch einen Spalt zwischen mindestens einem Paar von Walzen geführt wird, wobei die Walzen unterschiedliche Umfangsgeschwindigkeiten besitzen. Das Bahnenmaterial wird dadurch gleichzeitig einer Kompression und einer Scherung unterworfen. Allerdings ist es sehr schwierig, mit diesem Verfahren eine gleichmäßige Öffnung aller oder eines definierten Teils der Zellen zu erreichen. Bei zu starker Scherung wird außerdem das Polyolefin-Material bleibend geschwächt, so dass das so hergestellte offenzellige Material eine geringere Reißfestigkeit aufweist als das Ausgangsmaterial. Außerdem unterscheiden sich die beiden Oberflächen - bedingt durch die Scherung - in ihren physikalischen und haptischen Eigenschaften.

Aus der DE 699 02 283 T2 ist ein Verfahren zur Herstellung eines Polyolefinschaumens bekannt, bei dem durch bestimmte Modifikationen des Harzansatzes in Kombination mit sehr großen Zelldurchmessern und einem Vernadelungsprozess ein Teil der Zellen geöffnet wird. Die Eigenschaften dieser Schäume sind aber für viele Einsatzzwecke ungeeignet.

### Aufgabe

Aufgabe der vorliegenden Erfindung ist es, ein alternatives Verfahren zur Herstellung eines offenzelligen, vernetzten Polyolefinschaums, insbesondere eines Polyethylenschaums, zur Verfügung zu stellen, dass kontinuierlich betrieben werden kann und diese Nachteile nicht aufweist.

### Darstellung der Erfindung

Die Erfindung löst diese Aufgabe durch ein Verfahren nach Anspruch 1, bevorzugt in Verbindung mit einem oder mehreren der Merkmale der Unteransprüche, sowie mit Hilfe einer Vorrichtung nach Anspruch 8 oder 9.

Als offenzellig im Sinne der vorliegenden Erfindung wird dabei auch ein Schaum angesehen, der nur teilweise offene Zellen aufweist. Es ist ebenfalls unschädlich, wenn der Schaum bereits vor der erfindungsgemäßen Behandlung einige offene Zellen aufweist. Erfindungswesentlich ist nur, dass zumindest einige der zuvor geschlossenen Zellen bei dem erfindungsgemäßen Verfahren geöffnet werden.

Erfindungsgemäß wird ausgegangen von einem zunächst geschlossenzelligen, vernetzten Polyolefinschaum. Dieses kann sowohl physikalisch vernetzter als auch chemisch vernetzter Polyolefinschaum sein, wobei physikalisch vernetzter Schaum bevorzugt wird. Besonders bevorzugt wird so genannter Vertikalschaum, das ist ein physikalisch vernetzter Schaum, der während des Schäumvorganges vertikal in einem Schäumofen geführt wird. Dieser Schaum weist charakteristisch asymmetrische Zellen auf, die in Produktionsrichtung gestreckt und in Dickenrichtung gestaucht sind. Dieser Schaum eignet sich besonders gut für das erfindungsgemäße Verfahren. Dieser geschlossenzellige, vernetzte Polyolefinschaum wird auf eine Temperatur unterhalb der Versprödungstemperatur Tᵥ des Polyolefinwerkstoffs, nach einer Alternative auf eine Temperatur unterhalb der Glastemperatur T_{g}, abgekühlt. Durch die Abkühlung unterhalb der Versprödungstemperatur Tᵥ verhärtet bzw. versprödet der Schaumstoff, so dass die Zellen bei der nachfolgenden mechanischen Beanspruchung wenigstens teilweise geöffnet werden.

Als Versprödungstemperatur Tᵥ im Sinne der vorliegenden Erfindung wird diejenige Temperatur verstanden, bei der der geschlossenzellige vernetzte Polyolefinschaumstoff seine Elastizität so weit verliert, dass wenigstens ein Teil der Zellwände bei mechanischer linienförmiger Belastung - d. h. insbesondere im Walzenspalt - reißt bzw. bricht. Die Versprödungstemperatur Tᵥ im Sinne der vorliegenden Erfindung kann oberhalb der so genannten Glastemperatur T_{g} liegen und wird in Anlehnung an die Norm EN 1876-2: 1997 wie folgt bestimmt: Ein Probekörper des zu bestimmenden Polyolefin-Schaumstoffs mit einer Breite von 15 mm und einer Länge von 60 mm wird - wie in der EN 1876-2, Seite 4, Fig. A, beschrieben, zu einer offenen Schlaufe gefaltet und auf die Anfangs-Prüftemperatur abgekühlt. Die Probe wird anschließend mit einem Hammer flächig belastet. Die Probe wird anschließend optisch daraufhin untersucht, ob Risse an der Oberfläche aufgetreten sind. Die Versuche werden bei jeweils fallenden Temperaturen so lange wiederholt, bis erstmals Risse an der Oberfläche auftreten. Die Temperatur, bei der diese Risse erstmals auftreten, ist die Versprödungstemperatur Tᵥ.

Bevorzugt wird der zunächst geschlossenzellige, vernetzte Polyolefinschaumstoff auf eine Temperatur abgekühlt, die wenigstens 10° unterhalb der so bestimmten Versprödungstemperatur Tᵥ liegt, insbesondere mindestens 20° unterhalb dieser Temperatur

Alternativ kann die für die mechanische Beanspruchung notwendige Temperatur anhand der Glastemperatur T_{g} des eingesetzten zunächst geschlossenzelligen, vernetzten Polyolefinschaums bestimmt werden, d. h., der Polyolefinschaum wird auf eine Temperatur unterhalb der Glastemperatur T_{g} des Polyolefinwerkstoffs abgekühlt und der abgekühlte Schaumstoff einer mechanischen Beanspruchung unterworfen, bei der die Zellen wenigstens teilweise geöffnet werden.

Als Glastemperatur T_{g}, auch Einfriertemperatur und im Englischen "glass transition temperature" genannt, wird diejenige mittlere Temperatur des Einfrierbereiches einer hochmolekularen Substanz bezeichnet, in der die mikrobrownsche Bewegung von Molekülketten einfriert und das Material dadurch in den Glaszustand übergeht. Sie kann z. B. durch die dem Fachmann geläufige DSC-Analyse bestimmt werden. Für die Zwecke der vorliegenden Erfindung ist nur eine relativ grobe Bestimmung der Glastemperatur T_{g} der eingesetzten Haupt-Polymerkomponente notwendig. Wird ein Polymerblend mit sehr unterschiedlichen Einzelkomponenten eingesetzt oder wird durch die Vernetzung die Glastemperatur T_{g} des Ausgangs-Schaumstoffs stark verändert, sollte der Tg-Wert des Ausgangsschaumes verwendet werden, soweit nicht wie bei der bevorzugten Verwendung von flüssigem Stickstoff als Kühlmedium der Tg-Wert ohnehin weit unterschritten wird.

Bevorzugt wird das erfindungsgemäße Verfahren bei einer Temperatur unterhalb von -80 °C, insbesondere bei einer Temperatur < -100 °C und besonders bevorzugt < -140 °C durchgeführt. Soweit wie bevorzugt mit so niedrigen Temperaturen von < -140 °C gearbeitet wird, können nahezu alle handelsüblichen Polyolefinschaumstoffe als Ausgangs-Schaumstoffe eingesetzt werden, ohne die Verfahrensbedingungen oder andere Einstellungen der Vorrichtung ändern zu müssen, da hierbei der Tᵥ-Wert handelsüblicher Ausgangs-Schaumstoffe sicher unterschritten wird.

Zur Herstellung der Ausgangs-Schaumstoffe verwendbare Polymere sind insbesondere Olefin-Homopolymere und Olefin-Copolymere, wie Polyethylen (LDPE, MDPE, HDPE), Copolymere von Ethylen mit anderen α-Olefinen mit 3 bis 8 Kohlenstoffatomen, Homopolymere und Copolymere des Propylens, wie Polypropylen oder Ethylen-Propylen-Copolymerisat. Geeignet sind aber auch andere EthylenCopolymere, wie LLDPE und VLDPE. Auch Mischungen mit anderen Polymeren und/oder Polymerblends, z. B. mit EVA, EBA, EMA, EEA, EAS, EVOH, Polybutylen, thermoplastische Elastomere oder Polyvinylchlorid, Polyurethan, Polystyrol, Polyamid, Polyester, Polyimide, Polyketonen, Polysulfone oder Mischungen von solchen Polymeren sind möglich.

Als Treibmittel zur Herstellung der Ausgangs-Schaumstoffe wird bevorzugt Azodicabonamid eingesetzt, es können aber auch andere sich bei höheren Temperaturen zersetzende chemische Treibmittel wie Natriumbicarbonat, Citrate o. dgl. verwendet werden. Ggf. können auch Treibmittel-Modifikatoren wie Metalloxide zugesetzt werden.

Als chemisches Vernetzungsmittel wird, soweit kein physikalisch vernetzter Schaum eingesetzt wird, bevorzugt ein Peroxid, insbesondere Dicumylperoxid, verwendet. Ggf. können zusätzlich dem Fachmann bekannte Vernetzungshilfsmittel wie TMPTMA und/oder Verarbeitungshilfsmittel wie Metallstearate, außerdem Antioxidantien, Farbpigmente und Füllstoffe wie Kreide, bevorzugt in Mengen < 30 Gew.-%, zugesetzt werden. Schließlich ist auch der Zusatz von an sich bekannten Flammschutzmitteln möglich, z. B. von polybromierten Kohlenwasserstoffen.

Soweit physikalisch vernetzter Schaum eingesetzt wird, wird die so genannte Matrix vor der Verschäumung einer Elektronenbestrahlung von 1 bis 10, bevorzugt 2 bis 5,5 Mrad ausgesetzt.

Als Ausgangsstoff für das erfindungsgemäße Verfahren eignen sich nahezu alle vernetzten Polyolefinschaumstoffe mit weitgehend geschlossenzelliger Struktur, besonders bevorzugt sind Polyolefinschaumstoffe auf Basis von Polyethylen. Die Rohdichte des Ausgangs-Schaumstoffes ist unkritisch, bevorzugt sind Schäume mit Dichten zwischen ca. 25 und 300 kg/m³, besonders bevorzugt werden Schaumstoffe von etwa 28 bis 150 kg/m³. Bei Schäumen unter 5 mm Dicke sind Rohdichten < 100 kg/m³ besonders bevorzugt.

Die Ausgangs-Schaumstoffe weisen bevorzugt eine mittlere Zellgröße - Durchmesser einer volumengleichen Kugel - von unter 2 mm, bevorzugt von unter 1 mm auf.

Der Ausgangsschaum wird nach einer besonders bevorzugten Ausführungsform der Erfindung mit flüssigem Stickstoff gekühlt. Flüssiger Stickstoff hat bei Umgebungsdruck einen Siedepunkt von etwa -196 °C, wird großtechnisch hergestellt und relativ preisgünstig für industrielle Zwecke angeboten.

Die für die Herstellung von Polyethylenschaumstoff eingesetzten Polyethylen-Typen, meist LDPE, weisen eine Versprödungstemperatur von ca. -80 °C und eine Glastemperatur von ca. -100 °C auf. Bei Kühlung mit flüssigem Stickstoff wird diese Temperatur somit weit unterschritten. Bei so niedrigen Temperaturen versprödet der Schaumstoff so stark, dass er durch relativ leichte mechanische Belastung, beispielsweise im Walzenspalt, im Inneren so aufgebrochen wird, dass die Zellwände wenigstens teilweise gebrochen werden. Erstaunlicherweise wird die makroskopische Struktur des Schaumstoffs ansonsten aber nicht zerstört, so dass der Schaum nach dem Öffnen der Zellwände noch immer eine hohe Reißfestigkeit und eine hohe Reißdehnung aufweist.

Untersuchungen bei erfindungsgemäß hergestellten offenzelligen Schaumstoffen haben gezeigt, dass durch die mechanische Beanspruchung im Walzenspalt, dem so genannten Crushen, statistisch die meisten Zellen eine senkrecht zur Oberfläche verlaufende Bruchlinie aufweisen. Die Reißfestigkeit des erfindungsgemäß hergestellten offenzelligen Polyolefinschaumstoffs beträgt typischerweise mehr als 80 % der Ursprungsreißfestigkeit des Ausgangsschaumstoffs. Soweit beim Crushen im Walzenspalt der Abstand der Walzen relativ groß gewählt wurde, sind kaum Einbu-ßen in der Reißfestigkeit und Reißdehnung zu erkennen.

Auch das so genannte Rückstellvermögen bzw. der so genannte Druckverformungsrest des erfindungsgemäß hergestellten offenzelligen Polyolefinschaums wird durch das erfindungsgemäße Öffnen der Zellwände nicht wesentlich beeinträchtigt.

Das Öffnen bzw. Brechen der Zellwände nach der Abkühlung unterhalb von Tᵥ erfolgt nach einer bevorzugten Ausführungsform der Erfindung durch Quetschen im Walzenspalt. Der Abstand der Walzen beträgt dabei bevorzugt 10 bis 60 %, besonders bevorzugt 10 bis 40 % der Dicke des geschlossenzelligen vernetzten Polyolefinschaumstoffs, wobei bei dichteren Ausgangsmaterialien - Rohdichte 100 bis 200 kg/m³ - der notwendige Abstand eher bei 20 bis 40 % der Dicke des Ausgangsmaterials liegt, bei niedrigen Rohdichten eher bei 10 bis 20 %. Durch Variieren der Dicke des Walzenspaltes kann der Grad der Offenzelligkeit leicht beeinflusst und gesteuert werden. Je größer der Abstand der Walzen, desto weniger Zellwände werden bei dieser mechanischen Beanspruchung zerstört, während ein enger Walzenspalt die Zellen zu nahe 100 % öffnet. Bevorzugt weisen die den Walzenspalt bildenden Walzen eine gleiche Umfangsgeschwindigkeit auf.

Es hat sich dabei überraschend herausgestellt, dass auf diese Weise auch gezielt Schäume hergestellt werden können, deren äußere Schichten einen wesentlich höheren Anteil an offenen Zellen aufweisen als die mittleren Schichten. Insbesondere, wenn der Walzenspalt im Verhältnis zur Ausgangsdicke des Schaumstoffs relativ groß gewählt wird, befinden sich gezielt in den äußeren Schichten die offenen Zellen, während die Kernbereiche des Schaumstoffs weitgehend geschlossenzellig verbleiben. Wird der Walzenspalt enger gewählt, werden auch die Zellen der kernnäheren Bereiche offenzelliger. Dieser Effekt kann auch kombiniert werden mit einer gezielten Temperatursteuerung. Wird der Schaumstoff zunächst homogen auf eine Temperatur weit unterhalb von Tᵥ abgekühlt und dann oberflächennahe Bereiche wieder vor der mechanischen Behandlung im Walzenspalt erwärmt, kann durch gezielte Einstellung des Walzenspaltes erreicht werden, dass definierte Bereiche unterhalb der Oberfläche und außerhalb des Kernbereiches geöffnet werden, während die anderen Bereiche weitgehend geschlossenzellig verbleiben.

Der Anteil der offenen Zellen beträgt nach der mechanischen Beanspruchung im Walzenspalt ("crushen") bevorzugt 30 bis 100 %, besonders bevorzugt 50 bis 90 %. Es liegt aber innerhalb der beanspruchten Erfindung, nur einen geringeren Teil der Zellen zu öffnen, z. B. 20 bis 50 %. Der Grad der Offenzelligkeit beeinflusst dabei in besonderem Maße die physikalischen und haptischen Eigenschaften des fertigen Schaumstoffes.

Nach einer weiteren bevorzugten Ausführungsform der Erfindung wird als Ausgangsmaterial ein verhauteter Polyolefinschaumstoff eingesetzt. Als verhautet wird ein Polyolefinschaumstoff bezeichnet, der - bedingt durch die Herstellung - an einer oder bevorzugt beiden Oberflächen eine geschlossene Schicht des Polymermaterials aufweist. Diese Haut hat meistens nur eine Dicke von wenigen hundertstel bis zehntel mm. Überraschenderweise wird diese Haut bei der Behandlung des tiefgekühlten Schaumstoffs im Walzenspalt nicht zerstört, so dass auch der so hergestellte erfindungsgemäß offenzellige Schaumstoff eine nahezu geschlossene Haut auf beiden Seiten aufweist.

Verstärkt werden kann dieser Effekt noch dadurch, dass der tiefgekühlte Schaumstoff vor dem Behandeln im Walzenspalt an beiden Oberflächen und beschränkt auf oberflächennahe Schichten wieder auf eine Temperatur oberhalb von Tᵥ erwärmt wird. Bei der anschließenden Behandlung im Walzenspalt werden dann nur die tiefer liegenden Kernbereiche des Schaumstoffs offenzellig, während die äußersten Schichten mehr oder weniger geschlossenzellig bleiben. Durch Variieren der Oberflächentemperatur kann somit die spätere Struktur des Schaumes leicht gesteuert werden.

Das erfindungsgemäße Verfahren eignet sich in besonderer Weise zur kontinuierlichen Herstellung von offenzelligen, vernetzten Polyolefinschäumen als Bahnenware. Als kontinuierlich im Sinne dieser Erfindung wird dabei auch ein Verfahren bezeichnet, bei dem die Bahnenware in Rollenform einer endlichen Länge, in der Regel einige 10 bis einige 100 m, verarbeitet wird. Es ist dabei grundsätzlich möglich, die Abkühlung auf eine Temperatur unterhalb von Tᵥ und die anschließende mechanische Beanspruchung zum Öffnen der Zellen inline unmittelbar im Anschluss an die Herstellung des geschlossenzelligen, vernetzten Polyolefinschaums durchzuführen. Es ist jedoch ebenfalls möglich, diese Verfahrensschritte offline durchzuführen, d. h., zunächst den geschlossenzelligen vernetzten Polyolefinschaum in herkömmlicher Weise herzustellen und auf Rollen zu wickeln und zu einem späteren Zeitpunkt diese Rollen wieder abzuwickeln und der erfindungsgemäßen Kühlung und mechanischen Beanspruchung zu unterziehen. Grundsätzlich liegt es aber auch innerhalb der beanspruchten Erfindung nach Anspruch 1, die Öffnung der Zellen bei kleineren Platten oder Blöcken, also diskontinuierlich im Batchverfahren, durchzuführen.

Die Dicke der Schaumstoffe liegt bevorzugt zwischen 1 bis 20 mm, insbesondere zwischen 1,5 und 15 mm. Das ist der Dickenbereich, bei dem bei kontinuierlicher Fertigung die Schaumstoffe üblicherweise geschlossene Schäumhäute aufweisen. Theoretisch sind alle Rohdichten von 25 bis 250 kg/m³ mit dem erfindungsgemäßen Verfahren crushbar, bei besonderen Anforderungen an die Weichheit sollten sich die Rohdichten aber überwiegend im Bereich < 100 kg/m³, bevorzugt < 50 kg/m³ bewegen. Es können chemisch wie auch physikalisch vernetzte, insbesondere auch weich modifizierte handelsübliche Polyolefinschaum-Typen zum Einsatz kommen.

Bei der erfindungsgemäß eingesetzten mechanischen Beanspruchung des unterhalb von Tᵥ gekühlten Schaumstoffs werden bevorzugt glatte Walzen verwendet, um eine gleichmäßige Öffnung der Zellen zu erreichen. Nach einer alternativen Ausführungsform der Erfindung werden jedoch bewusst profilierte oder mit grobem Muster versehene Walzen eingesetzt, um systematisch nur einen Teil der Zellen zu öffnen und Teilbereiche des Schaumstoffs geschlossenzellig zu belassen. Beispielsweise ist es möglich, eine oder beide Walzen mit quadratischen, rechteckigen oder sonst wie geformten Vertiefungen zu versehen, wobei die Größe dieser Vertiefungen im mm- oder cm-Bereich liegen kann. An den vertieften Bereichen wird der Schaumstoff in geringerem Maße oder gar nicht verdichtet, so dass in diesen Bereichen die Zellen ungeöffnet, also geschlossenzellig verbleiben.

Für die Durchführung des erfindungsgemäßen Verfahrens wird bevorzugt eine Vorrichtung verwendet, in der in einem weitgehend geschlossenen, sehr gut isolierten Gehäuse auf der einen Seite eine Zuführung für den noch geschlossenzelligen, vernetzten Polyolefinschaumstoff vorgesehen ist. Diese Zuführung kann beispielsweise aus einer Rolle oder einem Rollenpaar bestehen, die durch entsprechenden Antrieb eine definierte Geschwindigkeit der Schaumstoffbahn gewährleistet. In der Vorrichtung selbst befindet sich in definierter Höhe das Kühlmedium, insbesondere flüssiger Stickstoff. Durch an sich bekannte Vorrichtungen wird von einem Vorratsbehälter bei Bedarf flüssiger Stickstoff nachgefüllt, um den Flüssigkeitsspiegel in der Vorrichtung konstant zu halten.

Mittels eines z. B. flächigen Niederhalters oder einer Anzahl von Rollen wird die Schaumstoffbahn nach dem Eintritt in die Vorrichtung in den Flüssigkeitsspiegel der Kühlflüssigkeit eingetaucht und unterhalb des Flüssigkeitsspiegels gehalten. Bevorzugt ist der Niederhalter bzw. die Rollenanordnung dabei leicht schräg in Transportrichtung des Schaumstoffs ansteigend angeordnet, so dass der Schaumstoff zum Ende der Vorrichtung wieder aus der Kühlflüssigkeit austritt. Bevorzugt ohne stärkere Biegung verlässt der tiefgekühlte Schaumstoff anschließend die Kühlvorrichtung und wird nach einer ersten Ausführungsform der Erfindung unmittelbar einem Walzenspalt zur mechanischen Beanspruchung und Öffnen der Zellen zugeführt. Zweckmäßiger Weise ist der Abstand des Walzenpaares dabei einstellbar, um die Zellcharakteristik einstellen zu können. Nach einer alternativen Ausführungsform der Erfindung befindet sich unmittelbar vor dem Walzenpaar ein- oder beidseitig vom tiefgekühlten Schaumstoff eine Heizvorrichtung, insbesondere ein Infrarotstrahler, um die Oberfläche des Schaumstoffs im Bereich weniger hundertstel bis wenige mm zu erwärmen. Nach einer weiteren alternativen Ausführungsform der Erfindung befindet sich das Walzenpaar noch innerhalb der Kühlvorrichtung, bevorzugt jedoch oberhalb des Flüssigkeitsspiegels der Kühlflüssigkeit.

Soweit die Schaumstoffbahn im schrägen Winkel, d. h. leicht ansteigend, durch die Kühlflüssigkeit geführt wird, können die Walzen zur mechanischen Beanspruchung und Öffnen der Zellen ebenfalls leicht geneigt angeordnet werden, so dass die durch die Achsen der Walzen verlaufende Ebene genau senkrecht zur Schaumstoffbahn angeordnet ist. Hierdurch wird verhindert, dass die Bahn beim Eintritt in den Walzenspalt gebogen oder geknickt wird und damit ein Brechen der relativ spröden Schaumstoffbahn erfolgen kann.

Um die Kühlleistung des flüssigen Kühlmediums, insbesondere des flüssigen Stickstoffs, besser ausnutzen zu können, ist nach einer bevorzugten Ausführungsform der Erfindung vorgesehen, den Schaumstoff vor Eintritt in die Kühlvorrichtung vorzukühlen. Nach einer alternativen Ausführungsform wird der Schaumstoff innerhalb der Kühlvorrichtung in der über der Kühlflüssigkeit stehenden Gasphase ein- oder mehrfach längs der Kühlvorrichtung hin- bzw. hergeführt, um die relativ niedrige Temperatur der Gasphase oberhalb des Kühlflüssigkeitsspiegels zur Vorkühlung der Bahn zu nutzen.

Die notwendige Verweilzeit des Schaumstoffs im Kühlmedium bis zum Erreichen einer Kerntemperatur < Tᵥ richtet sich nach Dicke und Rohdichte des Schaumstoffs und kann über die Durchlaufgeschwindigkeit in Abhängigkeit der Länge des Kühlbehälters gesteuert werden. Zum Beispiel beträgt die notwendige Verweilzeit für einen Schaumstoff mit einer Rohdichte von 30 kg/m³ bei einer Dicke von 4 mm ca. 10 - 30 sec. Bei einer Beckenlänge von 2,5 m wird damit eine Durchlaufgeschwindigkeit von etwa 5 bis 15 m/min erreicht. Die konkret benötigten Verweilzeiten können am besten durch einfache Versuche ermittelt werden.

In technischen Bereichen, wie z. B. Kfz-Industrie, Konsumgüter-Industrie, für Klebebänder oder für Dichtungstechnik werden auf Basis von PU-Schaumstoffen sehr weiche Qualitäten eingesetzt, deren Eigenschaften mit geschlossenzelligen, auch mit weichmodifizierten PO-Schaumstofftypen nicht erreicht werden können. Vergleichsgrundlagen für die Weichheit sind z. B. offenzellige, weiche PU-Schaumstoffe. Der erfindungsgemäß hergestellte offenzellige vernetzte Polyolefinschaum hingegen eignet sich hervorragend für diese Einsatzzwecke. Es werden dabei die besonderen Eigenschaften von PO-Schaumstoffen, wie z. B. physikalische Eigenschaften, Kaschierbarkeit mit andern Materialien, Umformbarkeit, die Chemikalienbeständigkeit und die Recycelbarkeit genutzt und kombiniert mit der Weichheit und Rückstellfähigkeit, die für PU-Schaumstoffe typisch ist.

### Kurze Beschreibung der Zeichnung

Die Erfindung wird nachfolgend anhand eines Ausführungsbeispiels sowie der Zeichnung näher erläutert. Es zeigen dabei:

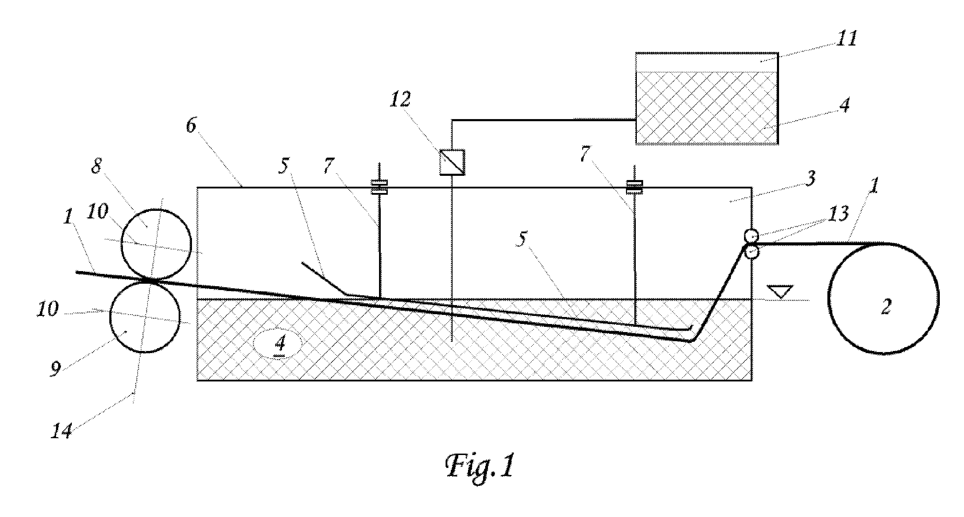

Fig. 1 einen symbolischen Querschnitt durch eine Vorrichtung zur Herstellung des offenzelligen Polyolefinschaums

### Bester Weg zur Ausführung der Erfindung

Für dieses Beispiel wird als Ausgangsschaumstoff ein handelsüblicher, physikalisch vernetzter, vertikal geschäumter Polyethylenschaumstoff, Typ Trocellen V03003, mit einer Dicke von 3 mm und einer Rohdichte von 30 kg/m³ eingesetzt. Dieser Schaum weist einen Tᵥ-Wert von -80 °C und deinen Tg-Wert von -100 °C sowie eine sehr feine Zellstruktur mit einer mittleren Zellgrö-ße < 0,5 mm auf. Mehr als 99 % der Zellen sind geschlossen. Der Ausgangsschaumstoff ist beidseitig verhautet und weist eine Breite von 1 m auf. Dieser Schaumstoff 1 wird kontinuierlich von einer Vorratsrolle 2 abgewickelt und der Vorrichtung gemäß Fig. 1 zugeführt.

Die Vorrichtung weist ein gut wärmeisoliertes Gehäuse 3 auf, in dem flüssiger Stickstoff 4 in definierter Füllhöhe gehalten wird. Verbrauchter flüssiger Stickstoff 4 wird aus dem Vorratsbehälter 11 über die Füllstandsregelung 12, in Fig. 1 symbolisch dargestellt, nachgefüllt.

Die Schaumstoffbahn 1 wird zunächst über Führungsrollen 13 in das Gehäuse 3 eingeführt und in den flüssigen Stickstoff 4 geleitet. Um ein Aufschwimmen der Schaumstoffbahn 1 im flüssigen Stickstoff 4 zu vermeiden, ist ein Leitblech 5 vorgesehen, ein mit Teflon beschichtetes grob gelochtes Metallblech. Mittels der Einstellvorrichtung 7 kann die Eintauchtiefe des Leitblechs 5 und damit der Schaumstoffbahn 1 eingestellt werden.

Die Länge des Gehäuses 3 ist so bemessen, dass der Schaumstoff 1 eine Verweilzeit von 30 Sek. innerhalb des flüssigen Stickstoffs aufweist, wobei der Kern der Schaumstoffbahn 1 auf eine Temperatur von unter -130 °C abkühlt, also sicher unterhalb der Tg-Temperatur von -100 °C. Die Schaumstoffbahn 1 wird nach dem Eintauchen leicht schräg ansteigend, aber geradlinig durch die Vorrichtung geführt, um Biegungen oder Knicke zu vermeiden. Die Walzen 8 und 9 bilden einen Walzenspalt mit einem Abstand von 1 mm, so dass der Schaumstoff 1 beim Durchtreten durch den Walzenspalt um 2/3 seiner Dicke gestaucht wird. Hierdurch werden ca. 70 % aller Zellen geöffnet, ohne dass die mechanische Festigkeit des Schaumstoffs 1 wesentlich abnimmt.

Wie in Fig. 1 angedeutet, sind die beiden Rollen 8 mit ihren Achsen 10 leicht schräg angeordnet, so dass die durch die Achsen 10 der Rolle verlaufende Ebene 14 im rechten Winkel zur Oberfläche der Schaumstoffbahn 1 verläuft.

Der so hergestellte Polyolefinschaumstoff mit teilweise offenzelliger Struktur weist bezüglich der haptischen Eigenschaften den für offenzelligen Schaumstoff typischen "Softtouch" auf, d. h., bei leichtem Druck mit einem Finger gibt der Schaum mit kurzer zeitlicher Verzögerung nach und fühlt sich relativ weich an. Dennoch weist der Schaum relativ hohe Gebrauchstemperaturen - mittlerer linearer Schrumpf < 5 % - von etwa 100 bis 110 °C auf.

### Legende

- 1.: Bahn
- 2.: Rolle
- 3.: Gehäuse
- 4.: flüssiger Stickstoff
- 5.: Leitblech
- 6.: Deckel
- 7.: Einstellvorrichtung
- 8.: Walze
- 9.: Walze
- 10.: Achse
- 11.: Vorratsbehälter
- 12.: Füllstandsregelung
- 13.: Führungsrollen
- 14.: Ebene

## Patentansprüche

1. Verfahren zur Herstellung eines offenzelligen, vernetzten Polyolefinschaumes, bei dem zunächst ein geschlossenzelliger, vernetzter Polyolefinschaum hergestellt und anschließend die Zellen mechanisch wenigstens teilweise geöffnet werden, ***dadurch gekennzeichnet,* dass** der zunächst geschlossenzellige, vernetzte Polyolefinschaum auf eine Temperatur unterhalb der Versprödungstemperatur T_{V} des Polyolefinwerkstoffs abgekühlt und der abgekühlte Schaumstoff einer mechanischen Beanspruchung unterworfen wird, bei der die Zellen wenigstens teilweise geöffnet werden.

2. Verfahren nach Anspruch 1, ***dadurch gekennzeichnet,* dass** die Abkühlung des geschlossenzelligen vernetzten Polyolefinschaumstoffs mit flüssigem Stickstoff erfolgt.

3. Verfahren nach einem der Ansprüche 1 oder 2, ***dadurch gekennzeichnet,* dass** das Verfahren kontinuierlich durchgeführt wird.

4. Verfahren nach einem der Ansprüche 1 bis 3, ***dadurch gekennzeichnet,* dass** nach Abkühlung des zunächst geschlossenzellligen vernetzten Polyolefinschaumstoffs auf eine Temperatur unterhalb der Versprödungstemperatur Tᵥ wenigstens eine der beiden Oberflächen des gekühlten Schaumstoffs wieder auf eine Temperatur oberhalb von Tᵥ erwärmt wird, während der Kernbereich des Schaumstoffs unterhalb von Tᵥ bleibt.

5. Verfahren nach einem der Ansprüche 1 bis 4, ***dadurch gekennzeichnet,* dass** die mechanische Beanspruchung zur Öffnung der Zellen im Walzenspalt erfolgt.

6. Verfahren nach Anspruch 5, ***dadurch gekennzeichnet,* dass** die den Walzenspalt bildenden Walzen einen Abstand aufweisen, der 10 bis 60 % der Dicke des geschlossenzelligen vernetzten Polyolefinschaumstoffs beträgt.

7. Verfahren nach Anspruch 5 oder 6, ***dadurch gekennzeichnet,* dass** die den Walzenspalt bildenden Walzen eine gleiche Umfangsgeschwindigkeit aufweisen.

8. Vorrichtung zum Öffnen der Zellen eines geschlossenzelligen, vernetzten Polyolefinschaumstoffs, mit einem Gehäuse, in dem ein flüssiges Kühlmittel auf weitgehend konstantem Niveau gehalten wird, mit
- Mitteln zum Zuführen einer Schaumstoffbahn in das Gehäuse, wobei diese Mittel oberhalb des Flüssigkeitsspiegels des Kühlmittels angeordnet sind,
- Mitteln zum Führen der Schaumstoffbahn innerhalb des flüssigen Kühlmittels,
- einer Austrittsöffnung zum Herausführen des Schaumstoffs aus dem Gehäuse, wobei diese Austrittsöffnung oberhalb des Flüssigkeitsspiegels angeordnet ist,
- einem Walzenpaar zur mechanischen Beanspruchung der gekühlten Schaumstoffbahn, wobei das Walzenpaar innerhalb oder außerhalb des Gehäuses angeordnet ist.

9. Vorrichtung nach Anspruch 8, ***dadurch gekennzeichnet,* dass** die Schaumstoffbahn nach dem Eintauchen in das flüssige Kühlmedium geradlinig steigend durch das Gehäuse geführt wird, so dass die Schaumstoffbahn nach Durchlaufen von 50 bis 95 % der Länge des Gehäuses aus dem Flüssigkeitsspiegel auftaucht und geradlinig das Gehäuse durch die Austrittsöffnung verlässt.

10. Offenzelliger, vernetzter Polyolefinschaumstoff, erhältlich durch ein Verfahren nach einem der Ansprüche 1 bis 7, ***dadurch gekennzeichnet,* dass** der Schaumstoff beidseitig verhautet ist, wobei die Haut weitgehend unzerstört ist.
